# FASCICULE DE BREVET EUROPEEN

(11) **EP 3 638 020 B1**
(45) Date de publication et mention de la délivrance du brevet: **20.09.2023**
(21) Numéro de dépôt: 18732010.6
(22) Date de dépôt: 12.06.2018
(51) Int. Cl.: A01N 1/02

(54) **DISPOSITIF DE PERFUSION D'UN ORGANE**
ORGANPERFUSIONSVORRICHTUNG
ORGAN PERFUSION DEVICE

(30) Priorité: 13.06.2017 FR 1755321
(43) Date de publication de la demande: 22.04.2020
(60) Demande divisionnaire: 23190427.7
(73) Titulaire: Université de Technologie de Compiègne, 60200 Compiègne (FR); Centre National de la Recherche Scientifique, 75016 Paris (FR); Sorbonne Université, 75006 Paris 6 (FR); Institut National de la Santé et de la Recherche Médicale, 75013 Paris 13 (FR); Assistance Publique - Hôpitaux de Paris, 75012 Paris (FR)
(72) Inventeur: LEGALLAIS, Cécile, 60340 Villiers-Sous-Saint-Leu (FR); PAULLIER, Patrick, 60150 Thourotte (FR); SCATTON, Olivier, 92260 Fontenay-Aux-Roses (FR); SAVIER, Eric, 75014 Paris (FR)
(74) Mandataire: IPAZ
(86) Numéro de dépôt international: PCT/EP2018/065559
(87) Numéro de publication internationale: WO 2018/229080

(56) Documents cités:
- WO-A1-2005/009125
- WO-A1-2015/138832
- WO-A2-02/26034
- WO-A2-2009/138446
- WO-A2-2018/015548
- US-A1- 2014 272 923
- US-A1- 2015 322 404
- US-A1- 2015 342 177
- WEEDER PEPIJN D ET AL: "Machine perfusion in liver transplantation as a tool to prevent non-anastomotic biliary strictures: Rationale, current evidence and future directions", JOURNAL OF HEPATOLOGY, vol. 63, no. 1, 1 juillet 2015 (2015-07-01), pages 265-275, XP029175157, ISSN: 0168-8278, DOI: 10.1016/J.JHEP.2015.03.008

## Description

### Domaine technique

La présente invention concerne un dispositif de perfusion d'un organe.

Un tel dispositif permet par exemple de conserver un organe avant une transplantation. Le domaine de l'invention est plus particulièrement mais de manière non limitative celui de la transplantation hépatique.

### Etat de la technique antérieure

La transplantation hépatique permet de guérir certains cancers primitifs du foie développés sur cirrhose et les maladies terminales du foie. Les indications ne cessent de croître. Pour augmenter le nombre de greffons disponibles, il faut se tourner vers les greffons à risque, et donc peu utilisés parce qu'ils présentent un risque de défaillance, potentiellement mortelle pour le receveur. Afin de diminuer ce risque de défaillance, la méthode classique est de raccourcir au maximum le délai entre le prélèvement et la greffe. Une nouvelle méthode consiste à maintenir l'organe à greffer en circulation *ex vivo* dans un milieu de perfusion afin de limiter les phénomènes nocifs de l'ischémie-reperfusion. Dans ce dernier cas également, l'augmentation du délai de conservation peut permettre de multiplier les tests de viabilité voire de « réparer » certains foies.

WO 2009/138446 A2 et WO 2015/138832 A1 divulguent des dispositifs de perfusion hépatique.

Le but de la présente invention est de proposer un dispositif de perfusion d'un organe permettant :
- d'optimiser les conditions de perfusion de l'organe et/ou d'augmenter le temps de conservation de l'organe, ce temps pouvant par exemple être mis à profit pour faire une évaluation histologique et biologique précise ; et/ou
- de mettre au point des tests de fonctionnalité et par conséquent de prédire le risque de défaillance primitive d'un greffon, et/ou
- de corriger les anomalies métaboliques, la stéatose macrovésiculaire en particulier, par un milieu perfusion et des conditions de température, de débit et de pression spécifiquement adaptées.

### Exposé de l'invention

Cet objectif est atteint avec un dispositif de perfusion d'un organe, ledit dispositif comprenant :
- un conteneur de fluide, agencé pour contenir un organe baignant dans un fluide de perfusion,
- une première voie comprenant une entrée agencée pour être plongée dans le conteneur, une sortie agencée pour être plongée dans le conteneur, et au moins une pompe agencée pour faire circuler le fluide de l'entrée à la sortie de la première voie,
- une deuxième voie comprenant une entrée agencée pour être plongée dans le conteneur, une sortie agencée pour être plongée dans le conteneur, et au moins une pompe agencée pour faire circuler le fluide de l'entrée à la sortie de la deuxième voie, la sortie de la première voie étant distincte de la sortie de la deuxième voie. La sortie de la première voie a un diamètre plus petit qu'un diamètre de la sortie de la deuxième voie.

Le dispositif selon l'invention comprend en outre, entre la pompe de la première voie et la sortie de la première voie et/ou entre la pompe de la deuxième voie et la sortie de la deuxième voie, des moyens d'oxygénation du fluide pour créer une différence d'oxygénation du fluide entre la sortie de la première voie et la sortie de la deuxième voie.

Les moyens d'oxygénation sont agencés pour plus oxygéner le fluide sortant de la sortie de la première voie que le fluide sortant de la sortie de la deuxième voie.

Le dispositif selon l'invention comprend de préférence des moyens d'oxygénation entre la pompe de la première voie et la sortie de la première voie.

Le dispositif selon l'invention peut ne pas comprendre de moyens d'oxygénation du fluide sur la deuxième voie.

La pompe de la première voie et/ou la pompe de la deuxième voie peut être une pompe péristaltique.

Le dispositif selon l'invention peut comprendre des moyens de régulation de température du fluide entre la pompe de la deuxième voie et la sortie de la deuxième voie.

Le dispositif selon l'invention peut ne pas comprendre de moyens de régulation de température du fluide sur la première voie.

L'entrée de la première voie et l'entrée de la deuxième voie peuvent être distinctes ou une même entrée commune.

L'entrée de la première voie et l'entrée de la deuxième voie sont de préférence une même entrée commune.

Le dispositif selon l'invention peut comprendre une séparation entre la première voie et la deuxième voie:
- entre l'entrée commune et la pompe de la première voie, et
- entre l'entrée commune et la pompe de la deuxième voie.

Le dispositif selon l'invention peut comprendre, entre l'entrée commune et la séparation, une pompe commune à la première voie et à la deuxième voie.

Le dispositif selon l'invention peut comprendre, entre l'entrée commune et la séparation, un réservoir commun à la première voie et à la deuxième voie.

Le réservoir commun est de préférence disposé entre la pompe commune et la séparation.

Le réservoir commun peut être équipé de moyens de dialyse, de préférence disposés sur un circuit en parallèle de la première voie et en parallèle de la deuxième voie, les moyens de dialyse comprenant une entrée partant du réservoir commun et une sortie arrivant dans le réservoir commun.

Le réservoir commun peut être équipé d'un piège à bulles.

Le diamètre intérieur de la sortie de la première voie est de préférence inférieur ou égal à 12 mm et/ou supérieur ou égal à 5 mm.

Le diamètre intérieur de la sortie de la deuxième voie est de préférence inférieur ou égal à 12 mm et/ou supérieur ou égal à 5 mm.

La pompe de la première voie et la pompe de la deuxième voie peuvent être agencées et/ou programmées pour que le fluide ait un débit à la sortie de la deuxième voie supérieur à un débit à la sortie de la première voie.

L'entrée de la première voie et/ou l'entrée de la deuxième voie peut être dépourvue de canule.

Le dispositif selon l'invention peut comprendre des moyens de régulation de température du conteneur.

Le dispositif selon l'invention peut comprendre un premier capteur de pression agencé pour mesurer la pression du fluide dans la première voie (de préférence à moins de 10 cm de la sortie de la première voie), entre la pompe de la première voie et la sortie de la première voie.

Le dispositif selon l'invention peut comprendre des moyens pour commander la pompe de la première voie de manière à réguler de débit de la pompe de la première voie en fonction de données de mesure de pression fournies par le premier capteur de pression.

Le dispositif selon l'invention peut comprendre un deuxième capteur de pression agencé pour mesurer la pression du fluide dans la deuxième voie (de préférence à moins de 10 cm de la sortie de la deuxième voie), entre la pompe de la deuxième voie et la sortie de la deuxième voie.

Le dispositif selon l'invention peut comprendre des moyens pour commander la pompe de la deuxième voie de manière à réguler le débit de la pompe de la deuxième voie en fonction de données de mesure de pression fournies par le deuxième capteur de pression.

Le dispositif selon l'invention peut comprendre une voie de communication entre la première voie et la deuxième voie, la voie de communication partant de préférence de la première voie entre les moyens d'oxygénation et la sortie de la première voie. La voie de communication peut comprendre un débitmètre agencé pour mesurer le débit de fluide traversant la voie de communication et/ou des moyens de réglages de ce débit.

Selon un autre aspect de l'invention, il est proposé un procédé de perfusion d'un organe, mis en oeuvre dans un dispositif comprenant :
- un conteneur de fluide, contenant un organe baignant dans un fluide de perfusion,
- une première voie comprenant une entrée plongée dans le conteneur, une sortie plongée dans le conteneur, et au moins une pompe faisant circuler le fluide de l'entrée à la sortie de la première voie,
- une deuxième voie comprenant une entrée plongée dans le conteneur, une sortie plongée dans le conteneur, et au moins une pompe faisant circuler le fluide de l'entrée à la sortie de la deuxième voie,
la sortie de la première voie étant distincte de la sortie de la deuxième voie.

La sortie de la première voie a un diamètre plus petit qu'un diamètre de la sortie de la deuxième voie.

Le procédé selon l'invention comprend, entre la pompe de la première voie et la sortie de la première voie et/ou entre la pompe de la deuxième voie et la sortie de la deuxième voie, une création, par des moyens d'oxygénation, d'une différence d'oxygénation du fluide entre la sortie de la première voie et la sortie de la deuxième voie.

La création de la différence d'oxygénation oxygène plus le fluide sortant de la sortie de la première voie que le fluide sortant de la sortie de la deuxième voie.

Le procédé selon l'invention peut comprendre une oxygénation du fluide entre la pompe de la première voie et la sortie de la première voie.

Le procédé selon l'invention peut ne pas comprendre d'oxygénation du fluide sur la deuxième voie.

La pompe de la première voie et/ou la pompe de la deuxième voie est de préférence une pompe péristaltique.

Le procédé selon l'invention peut comprendre une régulation de température du fluide entre la pompe de la deuxième voie et la sortie de la deuxième voie.

Le procédé selon l'invention peut ne pas comprendre de régulation de température du fluide sur la première voie.

L'entrée de la première voie et l'entrée de la deuxième voie sont de préférence une même entrée commune.

Le dispositif pour la mise en oeuvre du procédé selon l'invention peut comprendre une séparation entre la première voie et la deuxième voie:
- entre l'entrée commune et la pompe de la première voie, et
- entre l'entrée commune et la pompe de la deuxième voie.

Le dispositif pour la mise en oeuvre du procédé selon l'invention peut comprendre, entre l'entrée commune et la séparation, une pompe commune à la première voie et à la deuxième voie.

Le dispositif pour la mise en oeuvre du procédé selon l'invention peut comprendre, entre l'entrée commune et la séparation, un réservoir commun à la première voie et à la deuxième voie.

Le réservoir commun peut être disposé entre la pompe commune et la séparation.

Le procédé selon l'invention peut comprendre une dialyse, par des moyens de dialyse, du fluide sur un circuit en parallèle de la première voie et en parallèle de la deuxième voie, les moyens de dialyse comprenant une entrée partant du réservoir commun et une sortie arrivant dans le réservoir commun.

Le réservoir commun peut être équipé d'un piège à bulles.

Le diamètre intérieur de la sortie de la première voie peut être inférieur ou égal à 12 mm et/ou supérieur ou égal à 5 mm.

Le diamètre intérieur de la sortie de la deuxième voie peut être inférieur ou égal à 12 mm et/ou supérieur ou égal à 5 mm.

Le fluide peut avoir un débit à la sortie de la deuxième voie supérieur à un débit à la sortie de la première voie.

L'entrée de la première voie et/ou l'entrée de la deuxième voie peut être dépourvue de canule.

Le procédé selon l'invention peut comprendre une régulation de température du conteneur.

Le procédé selon l'invention peut comprendre une mesure, par un premier capteur de pression, de la pression du fluide dans la première voie (de préférence à moins de 10 cm de la sortie de la première voie), entre la pompe de la première voie et la sortie de la première voie. Le procédé selon l'invention peut comprendre une commande de la pompe de la première voie de manière à réguler de débit de la pompe de la première voie en fonction de données de mesure de pression fournies par le premier capteur de pression.

Le procédé selon l'invention peut comprendre une mesure, par un deuxième capteur de pression, de la pression du fluide dans la deuxième voie (de préférence à moins de 10 cm de la sortie de la deuxième voie), entre la pompe de la deuxième voie et la sortie de la deuxième voie. Le procédé selon l'invention peut comprendre une commande de la pompe de la deuxième voie de manière à réguler le débit de la pompe de la deuxième voie en fonction de données de mesure de pression fournies par le deuxième capteur de pression.

Dans le procédé selon l'invention, l'organe peut être perfusé par le fluide qui est tout d'abord à une température minimale comprise entre 0 et 10°C, avant d'être réchauffé graduellement par le fluide, ce fluide atteignant graduellement une température maximale comprise entre 33 et 43°C.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 est une vue schématique d'un premier mode de réalisation de l'invention, qui est le mode de réalisation préféré de l'invention, et
- la figure 2 illustre différentes variantes ou modifications pouvant chacune être mises en oeuvre dans le premier mode de réalisation de l'invention indépendamment ou en combinaison des autres variantes.

Ce mode de réalisation étant nullement limitatifs, on pourra notamment considérer des variantes de l'invention ne comprenant qu'une sélection de caractéristiques décrites ou illustrées. L'invention est exposée dans le jeu de revendications joint.

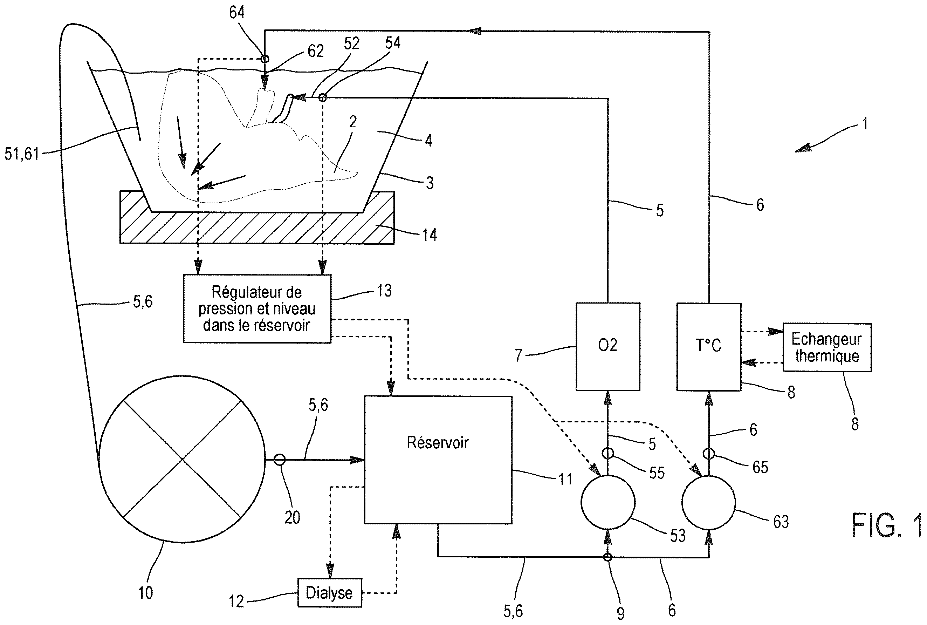

On va tout d'abord décrire, en référence à la figure 1, un premier mode de réalisation de dispositif 1 selon l'invention.

Le dispositif 1 est un dispositif de perfusion d'un organe 2.

Cet organe 2, qui ne fait pas partie du dispositif 1, est par exemple un foie (de préférence humain) prévu pour une transplantation.

Le dispositif 1 comprend un conteneur 3 de fluide, agencé pour contenir l'organe (2) baignant dans un fluide de perfusion 4.

Le fluide 4 ne fait pas partie du dispositif 1, mais est un consommable du dispositif 1.

Le conteneur 3 est par exemple une cuve ouverte en métal inoxidable.

Le conteneur 3 est de préférence équipé de poignées qui permettent de fixer un ou des tuyaux supplémentaires (non illustrés) de calibre(s) adapté(s), chaque tuyau supplémentaire (non illustré) étant connecté à la un canal naturel (exemple : la voie biliaire pour le foie, l'uretère pour un rein) et le recueil se faisant par déclivité dans un réceptacle placé en dehors et en dessous du conteneur 3.

Le conteneur 3 est par exemple un conteneur BackTherm, Connectorate AG, Bernstrasse 390 CH-8953 Dietkon/Suisse.

Le fluide de perfusion 4 est de préférence un liquide de conservation des organes acellulaires ou un liquide physiologique, tamponné, additionné ou non de molécules ou de cellules pour le transport d'oxygène ou pour un effet pharmacologique.

Le dispositif 1 comprend une première voie 5 comprenant :
- une entrée 51 agencée pour être plongée dans le conteneur 3,
- une sortie 52 (dite artérielle) agencée pour être plongée dans le conteneur 3, et
- au moins une pompe 53 agencée pour faire circuler le fluide 4 de l'entrée 51 à la sortie 52 de la première voie 5.

Le diamètre intérieur de la sortie 52 de la première voie 5 est inférieur ou égal à 12 mm (ou 3/8 inch) et/ou supérieur ou égal à 5 mm (ou 1/8 inch).

Les différents éléments 51, 10, 11, 9, 53, 55, 7 de la première voie 5 sont de préférence reliés par des tuyaux en silicone et/ou polychlorure de vinyle (PVC).

Le diamètre intérieur de ces tuyaux de la première voie 5 depuis son entrée 51 jusqu'à sa sortie 52 est inférieur ou égal à 12 mm (ou 3/8 inch) et/ou supérieur ou égal à 5 mm (ou 1/8 inch).

Le dispositif 1 comprend une deuxième voie 6 comprenant :
- une entrée 61 agencée pour être plongée dans le conteneur 3,
- une sortie 62 (dite portale) agencée pour être plongée dans le conteneur 3, et
- au moins une pompe 63 agencée pour faire circuler le fluide 4 de l'entrée 61 à la sortie 62 de la deuxième voie 6.

Le diamètre intérieur de la sortie 62 de la deuxième voie 6 est inférieur ou égal à 12 mm (ou 3/8 inch) et/ou supérieur ou égal à 5 mm (ou 1/8 inch).

Les différents éléments 61, 10, 11, 9, 63, 65, 8 de la deuxième voie 6 sont de préférence reliés par des tuyaux en silicone et/ou polychlorure de vinyle (PVC).

Le diamètre intérieur de ces tuyaux de la deuxième voie 6 depuis son entrée 61 jusqu'à sa sortie 62 est inférieur ou égal à 12 mm (ou 3/8 inch) et/ou supérieur ou égal à 5 mm (ou 1/8 inch).

La sortie 52 de la première voie est distincte de la sortie 62 de la deuxième voie.

L'entrée 51 de la première voie 5 est dépourvue de canule. Il s'agit d'une simple extrémité de tuyau avec ou sans connecteur adapté au diamètre du tuyau sur au moins une de ses extrémités.

On entend par canule un conduit spécifiquement adaptée à être insérée dans un vaisseau naturel organique ou un conduit naturel organique..

L'entrée 61 de la deuxième voie 6 est dépourvue de canule. Il s'agit d'une simple extrémité de tuyau.

La sortie 52 de la première voie 5 est pourvue d'une canule.

La sortie 62 de la deuxième voie 6 est pourvue d'une canule.

La sortie artérielle 52 de la première voie 5 a un diamètre D1 plus petit qu'un diamètre D2 de la sortie portale 62 de la deuxième voie 6, de préférence d'au moins 25% i.e. (D2-D1)/D2≥25%.

Le dispositif 1 comprend en outre des moyens d'oxygénation 7 du fluide 4 agencés et/ou programmés et/ou réglés pour augmenter le taux d'oxygène dans le fluide 4 passant par les moyens 7.

Les moyens d'oxygénation 7 sont agencés et/ou programmés et/ou réglés pour créer une différence d'oxygénation du fluide 4 entre la sortie 52 de la première voie 5 et la sortie 62 de la deuxième voie 6.

Plus précisément, les moyens d'oxygénation 7 sont agencés et/ou programmés et/ou réglés pour plus oxygéner le fluide 4 sortant de la sortie 52 de la première voie 5 que le fluide 4 sortant de la sortie 62 de la deuxième voie 6. Autrement dit, les moyens d'oxygénation 7 sont agencés et/ou programmés et/ou réglés pour que la concentration totale finale C1 en oxygène dissous dans le fluide 4 sortant de la sortie 52 de la première voie 5 soit supérieure à la concentration totale finale C2 en oxygène dissous dans le fluide 4 sortant de la sortie 62 de la deuxième voie 6, de préférence d'au moins 25 % ou même 50% i.e. (C1-C2)/C1≥25% ou même 50%.

Ainsi, grâce aux moyens 7, en favorisant l'oxygénation de la voie artérielle 5 par rapport à la voie portale 6, on améliore les conditions de perfusion de l'organe selon des conditions naturelles physiologiques.

On améliore le temps de conservation de l'organe.

Les moyens d'oxygénation 7 sont situés dans la première voie 5.

Les moyens d'oxygénation 7 sont situés dans la première voie 5 entre la pompe 53 de la première voie 5 et la sortie 52 de la première voie 5.

Les moyens d'oxygénation 7 sont par exemple un oxygénateur de référence Dideco D902 ECMO Phisio ND Lilliput (Mirandola, Italy). Le dispositif 1 ne comprend pas de moyens d'oxygénation sur la deuxième voie 6. Autrement dit, Le dispositif 1 ne comprend pas sur la deuxième voie 6 de moyens agencés pour augmenter, sur la deuxième voie 6, la concentration en oxygène dissous dans le fluide 4.

La pompe 53 de la première voie 5 est une pompe péristaltique, par exemple une pompe de cardioplégie d'une console de circulation extra-corporelle (CEC) Stökert SIII ou S5 ou SC (Sorin Group LivaNova) ou modèle ultérieur.

De même, la pompe 63 de la deuxième voie 6 est une pompe péristaltique, par exemple une pompe de cardioplégie d'une console de circulation extra-corporelle (CEC) Stökert SIII ou S5 ou SC (Sorin Group / LivaNova) ou modèle ultérieur.

Le dispositif 1 comprend, dans la deuxième voie 6, des moyens 8 de régulation de température du fluide situés entre la pompe 63 de la deuxième voie 6 et la sortie 62 de la deuxième voie 6, sur une gamme de température d'au moins -10°C à +40°C, ou de préférence d'au moins entre 4°C et 37°C.

Les moyens de régulation de température 8 comprennent par exemple un échangeur thermique de référence « CSC 14 cardioplegia heat exchanger » (Sorin Group/ LivaNova).

Par contre, le dispositif 1 ne comprend pas de moyens de régulation de température du fluide 4 sur la première voie 5.

De manière particulièrement astucieuse, on rationnalise ainsi la structure du dispositif 1, on en simplifie la fabrication et on en diminue les coûts:
- en ne prévoyant des moyens d'oxygénation 7 que sur la première voie 5 pour créer un déséquilibre se rapprochant des conditions naturelles, et/ou
- en ne prévoyant des moyens de régulation de température 8 que sur la deuxième voie 6 qui a le plus haut débit.

On remarque sur la figure 1 que l'entrée 51 de la première voie 5 et l'entrée 61 de la deuxième voie 6 sont une même entrée commune.

Le dispositif 1 comprend :
- entre l'entrée commune 51, 61 et la pompe 53 de la première voie 5, et
- entre l'entrée commune 51, 61 et la pompe 63 de la deuxième voie 6,
une séparation 9 entre la première voie 5 et la deuxième voie 6.

Autrement dit, la première voie 5 et la deuxième voie 2 sont communes et confondues non pas en totalité mais uniquement sur une portion partant de l'entrée commune 51, 61 et allant jusqu'à la séparation 9.

Les pompes 53 et 63 sont distinctes.

La pompe 53 est située sur la première voie 5 après la séparation 9, mais pas sur la deuxième voie 6.

La pompe 63 est située sur la deuxième voie 6 après la séparation 9, mais pas sur la première voie 5.

Le dispositif 1 comprend, entre l'entrée commune 51, 61 et la séparation 9, une pompe 10 qui est commune à la première voie 5 et à la deuxième voie 6.

La pompe commune 10 est une pompe péristaltique, par exemple une pompe principale d'une console de circulation extra-corporelle (CEC) Stökert SIII ou S5 ou SC (Sorin Group / LivaNova) ou modèle ultérieur.

Le dispositif 1 comprend, entre l'entrée commune 51, 61 et la séparation 9, un réservoir 11 qui est commun à la première voie 5 et à la deuxième voie 6.

Le réservoir 11 est par exemple un réservoir 11 de référence D 754 PH ND (Sorin Group).

Le réservoir commun 11 est disposé entre la pompe commune 10 et la séparation 9.

Le réservoir commun 11 est équipé de moyens de dialyse 12 disposés sur un circuit en parallèle de la première voie 5 et en parallèle de la deuxième voie 6.

Les moyens de dialyse 12 comprennent une entrée partant du réservoir commun 11 et une sortie arrivant dans le réservoir commun 11.

Les moyens de dialyse comprennent par exemple un hémodialyseur dialyseur Polyflux 2H (Gambro/Baxter) ainsi qu'un système de dialyse de type Artis.

Le réservoir commun 11 est équipé d'un piège à bulles (non illustré) agencé pour retirer des bulles de gaz du fluide 4 passant par le réservoir 11. Le dispositif 1 ne comprend pas d'autre piège à bulles sur les voies 5, 6 entre le réservoir 11 et les sorties 52, 62.

La pompe 53 de la première voie et la pompe 63 de la deuxième voie sont agencées et/ou programmées (via les moyens de commande 13 décrits par la suite) pour que le fluide 4 ait un débit Q65 à la sortie 62 de la deuxième voie supérieur à un débit Q55 à la sortie 52 de la première voie, de préférence d'au moins 25% i.e. (Q65-Q55)/Q65≥25%.

Le dispositif 1 est agencé et/ou programmé pour régler (via les moyens 13 décrits par la suite) le débit de chacune des pompes parmi la pompe 53 de la première voie et la pompe 63 de la deuxième voie de manière indépendante les unes des autres. Cela permet de pouvoir agir distinctement sur les voies artérielle 5 et portale 6 notamment pour des tests de fonctionnalité et/ou pour optimiser les conditions de perfusion auxquelles est soumis l'organe 2.

Plus précisément, le dispositif 1 est agencé et/ou programmé pour régler (via les moyens 13 décrits par la suite) le débit de chacune des pompes parmi la pompe 10, la pompe 53 de la première voie et la pompe 63 de la deuxième voie de manière indépendante les unes des autres.

Le dispositif 1 comprend des moyens 14 de régulation de température du conteneur 3 (et donc de régulation de température du fluide 4 et/ou de l'organe 2 contenu dans le conteneur 3), sur une gamme de température d'au moins -10°C à +40°C, ou de préférence d'au moins entre 4°C et 37°C.

Les moyens 14 comprennent typiquement un régulateur inclus dans le système électronique de la BackTherm (BackTherm, Connectorate AG, Bernstrasse 390 CH-8953 Dietkon/Suisse) qui porte le conteneur 3.

Le dispositif 1 comprend un premier capteur de pression 54 agencé pour mesurer la pression du fluide 4 dans la première voie 5 à moins de 10 cm de la sortie 52 de la première voie, entre la pompe 53 de la première voie 5 et la sortie 52 de la première voie 5.

Le capteur 54 est par exemple un capteur de référence Edwards Lifesciences TruWave^{™} (EdisonStr. 6 85716 Unterschleissheim, Germany).

Le dispositif 1 comprend des moyens 13 agencés et/ou programmés pour commander la pompe 53 de la première voie 5 de manière à réguler de débit de la pompe 53 de la première voie 5 en fonction de données de mesure de pression fournies par le premier capteur de pression 54.

Le dispositif 1 comprend un deuxième capteur de pression 64 agencé pour mesurer la pression du fluide 4 dans la deuxième voie 6 à moins de 10 cm de la sortie 62 de la deuxième voie, entre la pompe 63 de la deuxième voie 6 et la sortie 62 de la deuxième voie 6.

Le capteur 64 est par exemple un capteur de référence Edwards Lifesciences TruWave^{™} (EdisonStr. 6 85716 Unterschleissheim, Germany).

Le dispositif 1 comprend des moyens 13 agencés et/ou programmés pour commander la pompe 63 de la deuxième voie 6 de manière à réguler le débit de la pompe 63 de la deuxième voie 6 en fonction de données de mesure de pression fournies par le deuxième capteur de pression 64.

Les moyens 13 ne comprennent que des moyens techniques.

Les moyens 13 comprennent au moins un ordinateur, une unité centrale ou de calcul, un circuit électronique analogique (de préférence dédié), un circuit électronique numérique (de préférence dédié), un microprocesseur (de préférence dédié), et/ou des moyens logiciels.

Dans cet exemple non limitatif de réalisation de dispositif 1, les moyens 13 peuvent par exemple comprendre ou être adaptés à partir d'un système de contrôle de console de circulation extra-corporelle (CEC) Stökert SIII ou S5 ou SC (Sorin Group / LivaNova) ou modèle ultérieur.

Les moyens de commande 13 sont agencés et/ou programmés pour :
- envoyer une commande à la pompe 53, en fonction de données de mesure de pression fournies par le capteur de pression 54, jusqu'à ce que la pression mesurée par le capteur 54 corresponde ou soit inférieur à un premier réglage (dit « artériel ») de pression, et/ou
- envoyer une commande à la pompe 63, en fonction de données de mesure de pression fournies par le deuxième capteur de pression 64, jusqu'à ce que la pression mesurée par le capteur 64 corresponde ou soit inférieur à un deuxième réglage (dit « portal ») de pression.

Les moyens de commande comprennent des moyens de mémorisation du premier réglage (dit « artériel ») de pression et du deuxième réglage (dit « portal ») de pression, et/ou des moyens de saisie (boutons, écran tactile, etc.) par un utilisateur du premier réglage (dit « artériel ») de pression et du deuxième réglage (dit « portal ») de pression.

Le réservoir 11 comprend des moyens de commande (non illustrés, mais pouvant par exemple comprendre les moyens de commande 13) agencés et/ou programmés pour :
- déclencher une alarme (sonore, visuelle ou autre) et/ou arrêter la pompe 10 si le niveau de fluide 4 dans le réservoir 11 dépasse un seuil maximum, et/ou
- déclencher une alarme (sonore, visuelle ou autre) et/ou arrêter les pompes 53 et 63 si le niveau de fluide 4 dans le réservoir 11 est inférieur à un seuil minimum.

Le dispositif 1 comprend en outre un capteur de débit 55 situé sur la première voie 5 en aval de la pompe 53 (plus précisément entre la pompe 53 et la sortie 52, plus précisément entre la pompe 53 et les moyens 7) et agencé pour mesurer le débit Q55 du fluide 4 sur la première voie 5 en aval de la pompe 53 (plus précisément entre la pompe 53 et la sortie 52, plus précisément entre la pompe 53 et les moyens 7).

Le dispositif 1 comprend en outre un capteur de débit 65 situé sur la deuxième voie 6 en aval de la pompe 63 (plus précisément entre la pompe 63 et la sortie 62, plus précisément entre la pompe 63 et les moyens 8) et agencé pour mesurer le débit Q65 du fluide 4 sur la deuxième voie 6 en aval de la pompe 63 (plus précisément entre la pompe 63 et la sortie 62, plus précisément entre la pompe 63 et les moyens 8).

Le dispositif 1 comprend en outre un capteur de débit 20 situé sur la partie commune de la première voie 5 et de la deuxième voie 6 en aval de la pompe 10 (plus précisément entre la pompe 10 et la séparation 9, plus précisément entre la pompe 10 et le réservoir 11) et agencé pour mesurer le débit Q20 du fluide 4 sur la partie commune de la première voie 5 et de la deuxième voie 6 en aval de la pompe 10 (plus précisément entre la pompe 10 et la séparation 9, plus précisément entre la pompe 10 et le réservoir 11).

Chacun des capteurs de débit 20, 55, 65 est par exemple un débitmètre électromagnétique externe ou des moyens de la Console (CEC) Stökert SIII ou S5 ou SC (Sorin Group / LivaNova) qui calculent le débit en fonction de la vitesse de rotation de chaque pompe respectivement 10, 53, 63 et le diamètre des tuyaux

Le dispositif 1 comprend en outre des moyens (non illustrés, mais pouvant par exemple comprendre les moyens de commande 13) agencés et/ou programmés pour déclencher une alarme (sonore, visuelle ou autre) et/ou modifier des commandes de débit des pompes 10, 55 et/ou 65 en fonction du signe et/ou de la valeur de :
(Q55-Q65)-Q10.

Ceci permet d'éviter que le conteneur 3 ne déborde ou ne se vide.

En outre, le dispositif 1 permet de corriger les anomalies métaboliques de l'organe 2, la stéatose macrovésiculaire en particulier, par un milieu perfusion spécifique et des conditions de température (via les moyens 8, 14), de débit (via les capteurs 55 et 65 et les moyens 13) et de pression (via les capteurs 54 et 64 et les moyens 13) spécifiquement adaptées.

On va maintenant décrire un procédé selon l'invention de perfusion de l'organe 2, mis en oeuvre dans le dispositif 1.

Pour ce procédé :
- le conteneur 3 contient l'organe 2 qui baigne dans le fluide de perfusion 4,
- l'entrée 51 est plongée dans le conteneur 3, la sortie 52 est plongée dans le conteneur 3, et la pompe 53 fait circuler le fluide de l'entrée 51 à la sortie 52 de la première voie 5,
- l'entrée 61 est plongée dans le conteneur 3, la sortie 62 est plongée dans le conteneur 3, et la pompe 63 fait circuler le fluide de l'entrée 61 à la sortie 62 de la deuxième voie 6.

Le procédé comprend une création, par les moyens d'oxygénation 7, d'une différence d'oxygénation du fluide 4 entre la sortie 52 de la première voie 5 et la sortie 62 de la deuxième voie 6.

Autrement dit, la différence d'oxygénation est telle que la concentration totale finale C1 en oxygène dissous dans le fluide 4 sortant de la sortie 52 de la première voie 5 est supérieure à la concentration totale finale C2 en oxygène dissous dans le fluide 4 sortant de la sortie 62 de la deuxième voie 6, de préférence d'au moins 25 % ou même 50% i.e. (C1-C2)/C1≥25% ou même 50%.

Cette création de différence d'oxygénation est réalisée en injectant et dissolvant de l'oxygène dans le fluide 4 (de préférence uniquement) entre la pompe 53 de la première voie 5 et la sortie 52 de la première voie 5.

La création de la différence d'oxygénation oxygène plus le fluide 4 sortant de la sortie 52 de la première voie 5 que le fluide 4 sortant de la sortie 62 de la deuxième voie 6.

Le procédé comprend une oxygénation, par les moyens 7, du fluide 4 entre la pompe 53 de la première voie 5 et la sortie 52 de la première voie 5.

Le procédé ne comprend pas d'oxygénation du fluide 4 sur la deuxième voie 6.

Le procédé comprend une régulation, par les moyens 8, de la température du fluide 4 entre la pompe 63 de la deuxième voie 6 et la sortie 62 de la deuxième voie 6.

Le procédé ne comprend pas de régulation de température du fluide 4 sur première voie 5.

Le procédé comprend une dialyse, par les moyens de dialyse 12, du fluide 4 sur le circuit en parallèle de la première voie 5 et en parallèle de la deuxième voie 6.

Le procédé comprend une régulation, par les moyens 14, de température du conteneur 3 et donc du liquide 4 et de l'organe 2 contenu dans le conteneur 3.

Le procédé comprend une commande, par les moyens 13, de la pompe 53 de la première voie 5 et de la pompe 63 de la deuxième voie 6 de sorte que le fluide 4 a un débit Q65 à la sortie 62 de la deuxième voie 6 supérieur à un débit Q55 à la sortie 52 de la première voie 5.

Au cours de ce procédé, le fluide a un débit Q65 à la sortie 62 de la deuxième voie supérieur à un débit Q55 à la sortie 52 de la première voie 5, de préférence d'au moins 25% i.e. (Q65-Q55)/Q65≥25%.

Le procédé comprend un déclenchement d'une alarme (sonore, visuelle ou autre) et/ou une modification des commandes de débit des pompes 10, 55 et/ou 65 en fonction du signe et/ou de la valeur de :
(Q55-Q65)-Q10

Ceci permet d'éviter que le conteneur 3 ne déborde ou ne se vide.

Le procédé comprend une mesure, par le premier capteur de pression 54, de la pression du fluide 4 dans la première voie 5 (à moins de 10 cm de la sortie 52 de la première voie 5), entre la pompe 53 de la première voie 5 et la sortie 52 de la première voie 5.

Le procédé comprend une commande, par les moyens 13, de la pompe 53 de la première voie de manière à réguler de débit Q55 de la pompe 53 de la première voie 5 en fonction de données de mesure de pression fournies par le premier capteur de pression 54.

Le procédé comprend une mesure, par le deuxième capteur de pression 64, de la pression du fluide 4 dans la deuxième voie 6 (à moins de 10 cm de la sortie 62 de la deuxième voie 6), entre la pompe 63 de la deuxième voie 6 et la sortie 62 de la deuxième voie 6.

Le procédé comprend une commande, par les moyens 13, de la pompe 63 de la deuxième voie de manière à réguler le débit Q65 de la pompe de la deuxième voie 6 en fonction de données de mesure de pression fournies par le deuxième capteur de pression 64.

Plus exactement, concernant la régulation des débits Q55 et Q65, le procédé comprend :
- un envoi, par les moyens 13, d'une commande à la pompe 53, en fonction de données de mesure de pression fournies par le capteur de pression 54, jusqu'à ce que la pression mesurée par le capteur 54 corresponde ou soit inférieur au premier réglage (dit « artériel ») de pression, et/ou
- un envoi, par les moyens 13, d'une commande à la pompe 63, en fonction de données de mesure de pression fournies par le deuxième capteur de pression 64, jusqu'à ce que la pression mesurée par le capteur 64 corresponde ou soit inférieur au deuxième réglage (dit « portal ») de pression.

Le procédé comprend :
- un déclenchement d'une alarme (sonore, visuelle ou autre) et/ou un arrêt de la pompe 10 si le niveau de fluide 4 dans le réservoir 11 dépasse un seuil maximum, et/ou
- un déclenchement d'une alarme (sonore, visuelle ou autre) et/ou un arrêt des pompes 53 et 63 si le niveau de fluide 4 dans le réservoir 11 est inférieur à un seuil minimum.

Dans ce mode de réalisation de procédé selon l'invention, les moyens 8 de régulation de température du fluide sont utilisés pour réguler la température du fluide surtout un intervalle :
- partant d'une température minimale typiquement comprise entre 0 et 10°C, de préférence entre 2°C et 8°C, de préférence entre 3°C et 6°C, typiquement égale à 4°C,
- jusqu'à une température maximale typiquement comprise entre 33 et 43°C, de préférence entre 35°C et 41°C, de préférence entre 36°C et 39°C, typiquement égale à 37°C.

Dans ce mode de réalisation de procédé selon l'invention, l'organe 2 est perfusé par le fluide qui est tout d'abord au niveau des moyens 8 à la température minimale (typiquement 4°C ; pour permettre à l'organe 2 de reconstituer des stocks d'oxygène), avant d'être réchauffé graduellement par le fluide, ce fluide atteignant graduellement la température maximale (typiquement 37°C) au niveau des moyens 8.

Cela distingue l'invention par rapport à une utilisation en normothermie comme peuvent l'être les dispositifs de l'art antérieur.

Bien sûr, l'invention n'est pas limitée aux exemples qui viennent d'être décrits et de nombreux aménagements peuvent être apportés à ces exemples sans sortir du cadre de l'invention.

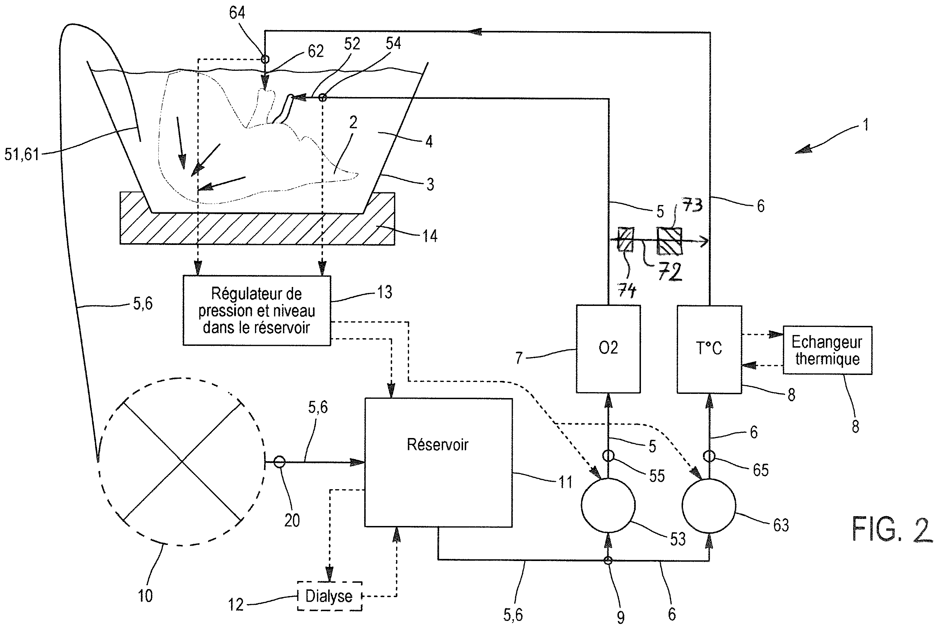

Par exemple, de manière non limitative, dans des variantes cumulables entre elles du dispositif 1 et/ou procédé précédemment illustré:
- le dispositif 1 peut comprendre en outre dans la seconde voie 6, entre la pompe 63 de la deuxième voie 6 et la sortie 62 de la deuxième voie 6, des moyens d'oxygénation 7 du fluide 4 agencés pour augmenter le taux d'oxygène dans le fluide 4 passant par les moyens 7 et/ou pour créer la différence d'oxygénation du fluide entre la sortie 52 de la première voie et la sortie 62 de la deuxième voie, et/ou
- le dispositif 1 peut comprendre en outre dans la première voie 5, entre la pompe 53 de la première voie 5 et la sortie 52 de la première voie 5, des moyens de régulation de température du fluide 4, et/ou
- les moyens de dialyse 12 peuvent être supprimés, et/ou
- en référence à la figure 2, le dispositif 1 peut comprendre en outre une voie de communication 72 entre la première voie 5 et la deuxième voie 6, après l'oxygénateur 7 (i.e la voie 72 partant de la première voie 5 entre les moyens d'oxygénation 7 et la sortie 52 et arrivant dans la deuxième voie 6 de préférence entre la pompe 63 de la deuxième voie 6 et la sortie 62 de la deuxième voie 6). De manière encore plus préférentielle, la voie 72 arrive dans la deuxième voie 6 entre les moyens 8 de régulation de la température du fluide et la sortie 62 de la deuxième voie 6. Cette voie 72 est agencée pour conduire (et conduit, dans le mode de réalisation de procédé selon l'invention de cette variante) du fluide de la première voie 5 vers la deuxième voie 6. Cette voie 72 est agencée pour oxygéner la deuxième voie 6, de façon à réduire ou mieux contrôler ou affiner la différence d'oxygénation entre les deux voies 5, 6 et ainsi, se rapprocher encore plus précisément des conditions physiologiques de l'organe 2. Un débitmètre 73 peut être connecté à la voie 72, ce débitmètre 73 étant agencé pour mesurer le débit de fluide traversant la voie 72. En plus de ce débitmètre, des moyens de réglages 74 de ce débit (comprenant par exemple une vanne) peuvent être ajoutés pour contrôler ou modifier le débit de cette voie de communication 72. Le débitmètre 73 et les moyens de contrôle 74 du débit sont optionnels, et/ou
- la pompe 10 peut être supprimée, et remplacée par un système à déclivité, le contenant 3 étant placé en position surélevée par rapport au réservoir 11.

## Revendications

1. Dispositif (1) de perfusion d'un organe (2), ledit dispositif comprenant :
- un conteneur (3) de fluide, agencé pour contenir un organe (2) baignant dans un fluide de perfusion (4),
- une première voie (5) comprenant une entrée (51) agencée pour être plongée dans le conteneur, une sortie (52) agencée pour être plongée dans le conteneur, et au moins une pompe (53) agencée pour faire circuler le fluide de l'entrée (51) à la sortie (52) de la première voie,
- une deuxième voie (6) comprenant une entrée (61) agencée pour être plongée dans le conteneur, une sortie (62) agencée pour être plongée dans le conteneur, et au moins une pompe (63) agencée pour faire circuler le fluide de l'entrée (61) à la sortie (62) de la deuxième voie,
la sortie (52) de la première voie étant distincte de la sortie (62) de la deuxième voie,
ledit dispositif comprenant en outre, entre la pompe (53) de la première voie et la sortie (52) de la première voie et/ou entre la pompe (63) de la deuxième voie et la sortie (62) de la deuxième voie, des moyens d'oxygénation (7) du fluide agencés pour créer une différence d'oxygénation du fluide entre la sortie (52) de la première voie et la sortie (62) de la deuxième voie,
**caractérisé en ce que** la sortie (52) de la première voie a un diamètre plus petit qu'un diamètre de la sortie (62) de la deuxième voie,
les moyens d'oxygénation (7) étant agencés pour plus oxygéner le fluide sortant de la sortie (52) de la première voie que le fluide sortant de la sortie (62) de la deuxième voie.

2. Dispositif selon la revendication 1, **caractérisé en ce qu'**il comprend des moyens d'oxygénation (7) entre la pompe (53) de la première voie et la sortie (52) de la première voie.

3. Dispositif selon l'une quelconque des revendications précédentes, **caractérisé en ce qu'**il ne comprend pas de moyens d'oxygénation sur la deuxième voie (6).

4. Dispositif selon l'une quelconque des revendications précédentes, **caractérisé en ce qu'**il comprend des moyens (8) de régulation de température du fluide entre la pompe (63) de la deuxième voie et la sortie (62) de la deuxième voie.

5. Dispositif selon l'une quelconque des revendications précédentes, **caractérisé en ce qu'**il ne comprend pas de moyens de régulation de température du fluide sur la première voie (5).

6. Dispositif selon l'une quelconque des revendications précédentes, **caractérisé en ce que** l'entrée (51) de la première voie et l'entrée (61) de la deuxième voie sont une même entrée commune.

7. Dispositif selon la revendication 6, **caractérisé en ce qu'**il comprend :
- entre l'entrée commune (51, 61) et la pompe (53) de la première voie, et
- entre l'entrée commune (51, 61) et la pompe (63) de la deuxième voie,
une séparation (9) entre la première voie (5) et la deuxième voie (6).

8. Dispositif selon la revendication 7, **caractérisé en ce qu'**il comprend :
- entre l'entrée commune (51, 61) et la séparation (9), une pompe commune (10) à la première voie (5) et à la deuxième voie (6) ;
- entre l'entrée commune (51, 61) et la séparation (9), un réservoir commun (11) à la première voie (5) et à la deuxième voie (6),
le réservoir commun (11) étant disposé entre la pompe commune (10) et la séparation (9),
le réservoir commun (11) étant équipé de moyens de dialyse (12) disposés sur un circuit en parallèle de la première voie (5) et en parallèle de la deuxième voie (6), les moyens de dialyse comprenant une entrée partant du réservoir commun (11) et une sortie arrivant dans le réservoir commun (11).

9. Dispositif selon la revendications 8, **caractérisé en ce que** le réservoir commun (11) est équipé d'un piège à bulles.

10. Dispositif selon l'une quelconque des revendications précédentes, **caractérisé en ce que** la pompe (53) de la première voie et la pompe (63) de la deuxième voie sont agencées et/ou programmées pour que le fluide à un débit à la sortie (62) de la deuxième voie supérieur à un débit à la sortie (52) de la première voie.

11. Dispositif selon l'une quelconque des revendications précédentes, **caractérisé en ce que** l'entrée (51) de la première voie et/ou l'entrée (61) de la deuxième voie est dépourvue de canule.

12. Dispositif selon l'une quelconque des revendications précédentes, **caractérisé en ce qu'**il comprend des moyens de régulation de température du conteneur (3).

13. Dispositif selon l'une quelconque des revendications précédentes, **caractérisé en ce qu'**il comprend une voie de communication (72) entre la première voie (5) et la deuxième voie (6), la voie de communication (72) partant de la première voie (5) entre les moyens d'oxygénation (7) et la sortie (52) de la première voie, la voie de communication (72) comprenant un débitmètre (73) agencé pour mesurer le débit de fluide traversant la voie de communication (72) et/ou des moyens de réglages (74) de ce débit.

14. Procédé de perfusion d'un organe (2), mis en oeuvre dans un dispositif comprenant :
- un conteneur (3) de fluide, contenant un organe (2) baignant dans un fluide de perfusion (4),
- une première voie (5) comprenant une entrée (51) plongée dans le conteneur, une sortie (52) plongée dans le conteneur, et au moins une pompe (53) faisant circuler le fluide de l'entrée (51) à la sortie (52) de la première voie,
- une deuxième voie (6) comprenant une entrée (61) plongée dans le conteneur, une sortie (62) plongée dans le conteneur, et au moins une pompe (63) faisant circuler le fluide de l'entrée (61) à la sortie (62) de la deuxième voie,
la sortie (52) de la première voie étant distincte de la sortie (62) de la deuxième voie,
le procédé comprenant, entre la pompe (53) de la première voie et la sortie (52) de la première voie et/ou entre la pompe (63) de la deuxième voie et la sortie (62) de la deuxième voie, une création, par des moyens d'oxygénation (7), d'une différence d'oxygénation du fluide entre la sortie (52) de la première voie et la sortie (62) de la deuxième voie,
**caractérisé en ce que** la sortie (52) de la première voie a un diamètre plus petit qu'un diamètre de la sortie (62) de la deuxième voie, U
la création de la différence d'oxygénation oxygénant plus le fluide sortant de la sortie (52) de la première voie que le fluide sortant de la sortie (62) de la deuxième voie.

15. Procédé selon la revendication 14, **caractérisé en ce que** l'organe (2) est perfusé par le fluide qui est tout d'abord à une température minimale comprise entre 0 et 10°C, avant d'être réchauffé graduellement par le fluide, ce fluide atteignant graduellement une température maximale comprise entre 33 et 43°C.

## Patentansprüche

1. Vorrichtung (1) zum Perfundieren eines Organs (2), wobei die Vorrichtung umfasst:
- einen Fluidtank (3), der angeordnet ist, um ein in einem Perfusionsfluid (4) schwimmendes Organ (2) zu enthalten,
- eine erste Bahn (5), die einen zum Eintauchen in den Tank angeordneten Einlass (51), einen zum Eintauchen in den Tank angeordneten Auslass (52) und mindestens eine Pumpe (53) umfasst, die angeordnet ist, um das Fluid von dem Einlass (51) zu dem Auslass (52) der ersten Bahn zirkulieren zu lassen,
- eine zweite Bahn (6), die einen zum Eintauchen in den Tank angeordneten Einlass (61), einen zum Eintauchen in den Tank angeordneten Auslass (62) und mindestens eine Pumpe (63) umfasst, die angeordnet ist, um das Fluid von dem Einlass (61) zu dem Auslass (62) der zweiten Bahn zirkulieren zu lassen,
wobei sich der Auslass (52) der ersten Bahn von dem Auslass (62) der zweiten Bahn unterscheidet,
wobei die Vorrichtung ferner, zwischen der Pumpe (53) der ersten Bahn und dem Auslass (52) der ersten Bahn und/oder zwischen der Pumpe (63) der zweiten Bahn und dem Auslass (62) der zweiten Bahn, Sauerstoffzufuhrmittel (7) des Fluids umfasst, die angeordnet sind, um eine Differenz einer Sauerstoffzufuhr des Fluids zwischen dem Auslass (52) der ersten Bahn und dem Auslass (62) der zweiten Bahn zu erzeugen,
**dadurch gekennzeichnet, dass** der Auslass (52) der ersten Bahn einen kleineren Durchmesser als ein Durchmesser des Auslasses (62) der zweiten Bahn aufweist,
wobei die Sauerstoffzufuhrmittel (7) angeordnet sind, um dem Fluid, das aus dem Auslass (52) der ersten Bahn austritt, mehr Sauerstoff zuzuführen als dem Fluid, das aus dem Auslass (62) der zweiten Bahn austritt.

2. Vorrichtung nach Anspruch 1, **dadurch gekennzeichnet, dass** sie Sauerstoffzufuhrmittel (7) zwischen der Pumpe (53) der ersten Bahn und dem Auslass (52) der ersten Bahn umfasst.

3. Vorrichtung nach einem der vorstehenden Ansprüche,
**dadurch gekennzeichnet, dass** sie keine Sauerstoffzufuhrmittel in der zweiten Bahn (6) umfasst.

4. Vorrichtung nach einem der vorstehenden Ansprüche,
**dadurch gekennzeichnet, dass** sie Mittel (8) zum Regulieren der Temperatur des Fluids zwischen der Pumpe (63) der zweiten Bahn und dem Auslass (62) der zweiten Bahn umfasst.

5. Vorrichtung nach einem der vorstehenden Ansprüche,
**dadurch gekennzeichnet, dass** sie keine Fluidtemperaturregulierungsmittel in der ersten Bahn (5) umfasst.

6. Vorrichtung nach einem der vorstehenden Ansprüche,
**dadurch gekennzeichnet, dass** der Einlass (51) der ersten Bahn und der Einlass (61) der zweiten Bahn ein gleicher gemeinsamer Einlass sind.

7. Vorrichtung nach Anspruch 6, **dadurch gekennzeichnet, dass** sie umfasst:
- zwischen dem gemeinsamen Einlass (51, 61) und der Pumpe (53) der ersten Bahn, und
- zwischen dem gemeinsamen Einlass (51, 61) und der Pumpe (63) der zweiten Bahn,
eine Trennung (9) zwischen der ersten Bahn (5) und der zweiten Bahn (6).

8. Vorrichtung nach Anspruch 7, **dadurch gekennzeichnet, dass** sie umfasst:
- zwischen dem gemeinsamen Einlass (51, 61) und der Trennung (9), eine gemeinsame Pumpe (10) der ersten Bahn (5) und der zweiten Bahn (6);
- zwischen dem gemeinsamen Einlass (51, 61) und der Trennung (9), einen gemeinsamen Behälter (11) der ersten Bahn (5) und der zweiten Bahn (6),
wobei der gemeinsame Behälter (11) zwischen der gemeinsamen Pumpe (10) und der Trennung (9) angeordnet ist,
wobei der gemeinsame Behälter (11) mit Dialysemitteln (12) ausgestattet ist, die auf einer Kreisbahn parallel zu der ersten Bahn (5) und parallel zu der zweiten Bahn (6) eingerichtet sind, wobei die Dialysemittel einen Einlass von dem gemeinsamen Behälter (11) aus und einen Auslass in den gemeinsamen Behälter (11) hinein umfassen.

9. Vorrichtung nach Anspruch 8, **dadurch gekennzeichnet, dass** der gemeinsame Behälter (11) mit einer Blasenfalle ausgestattet ist.

10. Vorrichtung nach einem der vorstehenden Ansprüche,
**dadurch gekennzeichnet, dass** die Pumpe (53) der ersten Bahn und die Pumpe (63) der zweiten Bahn angeordnet und/oder programmiert ist/sind, damit das Fluid einen Durchfluss an dem Auslass (62) der zweiten Bahn größer als ein Durchfluss an dem Auslass (52) der ersten Bahn hat.

11. Vorrichtung nach einem der vorstehenden Ansprüche,
**dadurch gekennzeichnet, dass** der Einlass (51) der ersten Bahn und/oder der Einlass (61) der zweiten Bahn keine Kanüle aufweist.

12. Vorrichtung nach einem der vorstehenden Ansprüche,
**dadurch gekennzeichnet, dass** sie Temperaturregulierungsmittel des Tanks (3) umfasst.

13. Vorrichtung nach einem der vorstehenden Ansprüche,
**dadurch gekennzeichnet, dass** sie einen Kommunikationspfad (72) zwischen der ersten Bahn (5) und der zweiten Bahn (6) umfasst, wobei der Kommunikationspfad (72) von der ersten Bahn (5) zwischen den Sauerstoffzufuhrmitteln (7) und dem Auslass (52) der ersten Bahn ausgeht, wobei der Kommunikationspfad (72) einen Durchflussmesser (73) umfasst, der angeordnet ist, um den Fluiddurchfluss durch den Kommunikationspfad (72) und/oder die Regulierungsmittel (74) dieses Durchflusses zu messen.

14. Verfahren zum Perfundieren eines Organs (2), das in einer Vorrichtung implementiert ist, welche umfasst:
- einen Fluidtank (3), der ein in einem Perfusionsfluid (4) schwimmendes Organ (2) enthält,
- eine erste Bahn (5), umfassend einen in den Tank eingetauchten Einlass (51), einen in den Tank eingetauchten Auslass (52) und mindestens eine Pumpe (53), die das Fluid von dem Einlass (51) zum Auslass (52) der ersten Bahn zirkulieren lässt,
- eine zweite Bahn (6), umfassend einen in den Tank eingetauchten Einlass (61), einen in den Tank eingetauchten Auslass (62) und mindestens eine Pumpe (63), die das Fluid von dem Einlass (61) zum Auslass (62) der zweiten Bahn zirkulieren lässt,
wobei sich der Auslass (52) der ersten Bahn von dem Auslass (62) der zweiten Bahn unterscheidet,
wobei das Verfahren, zwischen der Pumpe (53) der ersten Bahn und dem Auslass (52) der ersten Bahn und/oder zwischen der Pumpe (63) der zweiten Bahn und dem Auslass (62) der zweiten Bahn, das Erzeugen, durch Sauerstoffzufuhrmittel (7), einer Differenz der Sauerstoffzufuhr des Fluids zwischen dem Auslass (52) der ersten Bahn und dem Auslass (62) der zweiten Bahn umfasst, **dadurch gekennzeichnet, dass** der Auslass (52) der ersten Bahn einen kleineren Durchmesser als ein Durchmesser des Auslasses (62) der zweiten Bahn aufweist,
wobei das Erzeugen der Sauerstoffzufuhrdifferenz dem Fluid, das aus dem Auslass (52) der ersten Bahn austritt, mehr Sauerstoff zuführt als dem Fluid, das aus dem Auslass (62) der zweiten Bahn austritt.

15. Verfahren nach Anspruch 14, **dadurch gekennzeichnet, dass** das Organ (2) durch das Fluid perfundiert wird, das zunächst eine Mindesttemperatur von 0 bis 10°C aufweist, bevor es schrittweise durch das Fluid erwärmt wird, wobei dieses Fluid schrittweise eine maximale Temperatur zwischen 33 und 43 C erreicht.

## Claims

1. Device (1) for perfusing an organ (2), said device comprising:
- a fluid container (3), arranged in order to contain an organ (2) immersed in a perfusion fluid (4),
- a first channel (5) comprising an inlet (51) arranged in order to be submerged in the container, an outlet (52) arranged in order to be submerged in the container, and at least one pump (53) arranged in order to circulate the fluid from the inlet (51) to the outlet (52) of the first channel,
- a second channel (6) comprising an inlet (61) arranged in order to be submerged in the container, an outlet (62) arranged in order to be submerged in the container, and at least one pump (63) arranged in order to circulate the fluid from the inlet (61) to the outlet (62) of the second channel,
the outlet (52) of the first channel being separate from the outlet (62) of the second channel,
said device further comprising, between the pump (53) of the first channel and the outlet (52) of the first channel and/or between the pump (63) of the second channel and the outlet (62) of the second channel, means (7) for oxygenating the fluid arranged in order to create a difference in the oxygenation of the fluid between the outlet (52) of the first channel and the outlet (62) of the second channel,
**characterized in that** said outlet (52) of the first channel has a diameter smaller than a diameter of the outlet (62) of the second channel,
the oxygenation means (7) being arranged for more oxygenating the fluid leaving the outlet (52) of the first channel than the fluid leaving the outlet (62) of the second channel.

2. Device according to claim 1, **characterized in that** it comprises oxygenation means (7) between the pump (53) of the first channel and the outlet (52) of the first channel.

3. Device according to any one of the preceding claims, **characterized in that** it does not comprise oxygenation means on the second channel (6).

4. Device according to any one of the preceding claims, **characterized in that** it comprises means (8) for regulating the temperature of the fluid between the pump (63) of the second channel and the outlet (62) of the second channel.

5. Device according to any one of the preceding claims, **characterized in that** it does not comprise means for regulating the temperature of the fluid on the first channel (5).

6. Device according to any one of the preceding claims, **characterized in that** the inlet (51) of the first channel and the inlet (61) of the second channel are one and the same common inlet.

7. Device according to claim 6, **characterized in that** it comprises:
- between the common inlet (51, 61) and the pump (53) of the first channel, and
- between the common inlet (51, 61) and the pump (63) of the second channel,
a separator (9) between the first channel (5) and the second channel (6).

8. Device according to claim 7, **characterized in that** it comprises:
- between the common inlet (51, 61) and the separator (9), a pump (10) common to the first channel (5) and the second channel (6);
- between the common inlet (51, 61) and the separator (9), a reservoir (11) common to the first channel (5) and the second channel (6).
the common reservoir (11) being placed between the common pump (10) and the separator (9),
the common reservoir (11) being equipped with dialysis means (12), placed on a circuit parallel to the first channel (5) and parallel to the second channel (6), the dialysis means comprising an inlet leaving from the common reservoir (11) and an outlet arriving in the common reservoir (11).

9. Device according to claim 8, **characterized in that** the common reservoir (11) is equipped with a bubble trap.

10. Device according to any one of the preceding claims, **characterized in that** the pump (53) of the first channel and the pump (63) of the second channel are arranged and/or programmed so that the fluid has a flow rate at the outlet (62) of the second channel that is greater than a flow rate at the outlet (52) of the first channel.

11. Device according to any one of the preceding claims, **characterized in that** the inlet (51) of the first channel and/or the inlet (61) of the second channel does not have a cannula.

12. Device according to any one of the preceding claims, **characterized in that** it comprises means for regulating the temperature of the container (3).

13. Device according to any one of the preceding claims, **characterized in that** it comprises a communication channel (72) between the first channel (5) and the second channel (6), the communication channel (72) starting from the first channel (5) between the oxygenation means (7) and the outlet (52) of the first channel, the communication channel (72) comprising a flowmeter (73) arranged in order to measure the flow rate of fluid passing through the communication channel (72) and/or means (74) for regulating this flow rate.

14. Method for perfusing an organ (2), implemented in a device comprising:
- a fluid container (3), containing an organ (2) immersed in a perfusion fluid (4),
- a first channel (5) comprising an inlet (51) submerged in the container, an outlet (52) submerged in the container, and at least one pump (53) circulating the fluid from the inlet (51) to the outlet (52) of the first channel,
- a second channel (6) comprising an inlet (61) submerged in the container, an outlet (62) submerged in the container, and at least one pump (63) circulating the fluid from the inlet (61) to the outlet (62) of the second channel,
the outlet (52) of the first channel being separate from the outlet (62) of the second channel,
the method comprising, between the pump (53) of the first channel and the outlet (52) of the first channel and/or between the pump (63) of the second channel and the outlet (62) of the second channel, creating, by oxygenation means (7), a difference in the oxygenation of the fluid between the outlet (52) of the first channel and the outlet (62) of the second channel,
**characterized in that** the outlet (52) of the first channel has a diameter smaller than a diameter of the outlet (62) of the second channel,
creating the difference in the oxygenation oxygenating more the fluid leaving the outlet (52) of the first channel than the fluid leaving the outlet (62) of the second channel.

15. Method according to claim 14, **characterized in that** the organ (2) is perfused by the fluid which is initially at a minimum temperature comprised between 0 and 10°C, before being reheated gradually by the fluid, this fluid gradually reaching a maximum temperature comprised between 33 and 43°C.
